# EUROPEAN PATENT APPLICATION

(11) **EP 4 647 323 A1**
(43) Date of publication of application: **12.11.2025**
(21) Application number: 25168463.5
(22) Date of filing: 04.04.2025
(51) Int. Cl.: B62D 21/11, B62D 21/15, B62D 25/08

(54) **FRAME MEMBER FOR VEHICLE AND VEHICLE-BODY FRONT STRUCTURE**

(30) Priority: 10.05.2024 JP 2024077070
(71) Applicant: MAZDA MOTOR CORPORATION, Hiroshima 730-8670 (JP)
(72) Inventor: Taniguchi, Nobutaka, Aki-gun, Hiroshima, 730-8670 (JP); Kuroki, Yui, Aki-gun, Hiroshima, 730-8670 (JP)
(74) Representative: Behr, Wolfgang

(57) **Abstract**

A frame member comprises a first vertical wall, a second vertical wall, a first lateral wall, a second lateral wall, a first inner wall arranged between the first and second vertical walls in a vehicle width direction and extending in a vertical direction, interconnecting the first and second lateral walls, and a second inner wall arranged between the second vertical wall and the first inner wall in the vehicle width direction and extending in the vertical direction, interconnecting the first and the second lateral walls. Each of the first and second lateral walls comprises a first portion interconnecting the first vertical wall and the first inner wall, a second portion interconnecting the first and second inner walls, and a third portion interconnecting the second vertical wall and the second inner wall. Each bending rigidity of the first portion and the third portion is larger than that of the second portion.

## Description

### BACKGROUND OF THE INVENTION

The present invention relates to a frame member for a vehicle and a vehicle-body front structure.

The US patent document (US6502874B) discloses a front part of an automobile comprising a frame member and a crash box which is an impact absorbing member connected to a front portion of the frame member. It is also disclosed that when the impact caused by a vehicle collision or the like is applied to the front part of the automobile from a forward side, the crash box has repeated buckling deformation in an extension direction thereof, so that the above-described impact to be transmitted to a vehicle body is absorbed.

However, in a case where the above-described crash box is deformed unexpectedly, a collision load is not transmitted to the frame member from the crash box efficiently, so that there is a concern that the collision-load absorption amount (function) by means of the frame member may deteriorate.

### SUMMARY OF THE INVENTION

An object of the present invention is to provide a frame member for a vehicle which is configured to absorb the collision load transmitted via the impact absorbing member and a vehicle-body front structure provided with this frame member for the vehicle, which can properly improve the collision-load absorption amount (function) by means of the frame member.

An aspect of the present invention is the frame member for the vehicle, which extends in a longitudinal direction and in particular obliquely forward-and-outward, in a vehicle width direction, has a closed-cross section perpendicular to an extension direction thereof, and is preferably configured to absorb a collision load by an impact absorbing member arranged in front thereof, comprising a first vertical wall extending in a vertical direction at the closed-cross section, a second vertical wall arranged on an inward side, in a vehicle width direction, of the first vertical wall and extending in the vertical direction at the closed-cross section, a first lateral wall extending in the vehicle width direction at the closed-cross section, interconnecting respective upper ends of the first vertical wall and the second vertical wall, a second lateral wall extending in the vehicle width direction at the closed-cross section, interconnecting respective lower ends of the first vertical wall and the second vertical wall, and forming the closed-cross section together with the first vertical wall, the second vertical wall, and the first lateral wall, a first inner wall arranged between the first vertical wall and the second vertical wall in the vehicle width direction and extending in the vertical direction at the closed-cross section, interconnecting the first lateral wall and the second lateral wall, and a second inner wall arranged between the second vertical wall and the first inner wall in the vehicle width direction and extending in the vertical direction at the closed-cross section, interconnecting the first lateral wall and the second lateral wall, wherein each of the first lateral wall and the second lateral wall comprises a first portion interconnecting the first vertical wall and the first inner wall, a second portion interconnecting the first inner wall and the second inner wall, and a third portion interconnecting the second vertical wall and the second inner wall, and each bending rigidity of the first portion and the third portion is larger than that of the second portion.

According to this structure, since the bending rigidity of the first portion and the bending rigidity of the third portion are larger than that of the second portion, the support rigidity for supporting the impact absorbing member can be enhanced, compared to a case where the bending rigidity of the first portion and the bending rigidity of the third portion are smaller than that of the second portion. Thereby, when the collision load is applied to the vehicle-body front structure from the forward side, the impact absorbing member is compressed easily, so that the impact absorbing member is suppressed from being deformed unexpectedly. Consequently, the collision load is transmitted to the frame member from the impact absorbing member efficiently, so that the collision-load absorption amount (function) by means of the frame member can be improved, compared to the case where the impact absorbing member is deformed unexpectedly.

If the bending rigidity of the second portion is extremely large, when the collision load is applied to the frame member from the forward side, there is a case where the second portion hinders proper compression of the frame member along its extension direction. According to the present invention, however, since the bending rigidity of the second portion is smaller than that of the first portion and the third portion, it can be suppressed that the second portion hinders the proper compression of the frame member along its extension direction, compared to a case where the bending rigidity of the second portion is that of each of the first portion and the third portion or larger. Thereby, the frame member is easily and uniformly compressed in the extension direction even when the collision load is applied to the frame member from the forward side. Consequently, the collision-load absorption amount (function) by means of the frame member can be improved, compared to the case where the bending rigidity of the second portion is that of each of the first portion and the third portion or larger.

As described above, in the frame member for the vehicle which is configured to absorb the collision load transmitted via the impact absorbing member or in the vehicle-body front structure provided with this frame member for the vehicle according to the present invention, the collision-load absorption amount (function) by means of the frame member can be properly improved.

**In** the frame member according to the above described aspect, the larger bending rigidity of said first portion and said third portion than that of said second portion is preferably obtained by setting the thickness, i.e. the dimension along a vertical direction, of the first portion and of the third portion to be larger than the thickness of the second portion.

**In** the frame member according to the above described aspect, the bending rigidity of the first portion is preferably identical to that of the third portion.

**In** the frame member according to the above described aspect, the identical bending rigidity of said first portion and said third portion is preferably obtained by setting the thickness, i.e. the dimension along a vertical direction, of the first portion and of the third portion to be identical.

**In** the frame member according to the above described aspect, the widths, i.e., the dimension along a lateral direction, of the first portion, the second portion, and the third portion are preferably substantially identical to each other.

**In** the frame member according to the above described aspect, the first vertical wall, the first inner wall, and the respective first portions of the first lateral wall and the second lateral wall preferably form a first closed-cross section at the closed-cross section, the first inner wall, the second inner wall, and the respective second portions of the first lateral wall and the second lateral wall form a second closed-cross section at the closed-cross section, the second vertical wall, the second inner wall, and the respective third portions of the first lateral wall and the second lateral wall form a third closed-cross section at the closed-cross section, and an area of the first closed-cross section, an area of the second closed-cross section, and an area of the third closed-cross section are identical to each other.

Accordingly, each moment of inertia of the respective closed-cross sections against the bending moment which is applied to the frame member in its extension direction from both end portions, in the longitudinal direction, of the frame member has the same value. Consequently, the local buckling can be properly suppressed from occurring at the frame member, and the frame member is so easily compressed uniformly in the extension direction that the collision-load absorption amount (function) by means of the frame member can be improved.

In the frame member according to the above described aspect, the respective heights, i.e. the respective dimensions along the vertical direction, of the first vertical wall, the second vertical wall, the first inner wall, and the second inner wall are preferably substantially the same.

In the frame member according to the above described aspect, the frame member is preferably a front subframe arranged below a front side frame which is provided on an outward side, in the vehicle width direction, of an engine room.

Accordingly, even in a structure in which the collision load applied along the vehicle longitudinal direction is absorbed by the front side frame and the collision load applied from the oblique forward side along the extension direction is absorbed by the front subframe, the front subframe can appropriately absorb the collision load applied along the vehicle longitudinal direction as well.

In the frame member according to the above described aspect, the frame member is preferably an extruded frame member.

The present invention further comprises a vehicle-body front structure provided with the frame member for the vehicle according to the above described aspect and which is preferably provided with an impact absorbing member arranged in front of the frame member for the vehicle.

In the vehicle-body front structure according to the above described aspect, an axial line of said impact absorbing member preferably matches an axial line of said frame member for the vehicle.

Accordingly, the collision load is so easily transmitted from the impact absorbing member to the frame member that the collision-load absorption amount (function) by means of the frame member can be improved.

In the vehicle-body front structure according to the above described aspect, the vehicle-body front structure comprises preferably a pair of frame members.

In the vehicle-body front structure according to the above described aspect, the vehicle-body front structure preferably comprises a pair of impact absorbing members, a cross member, and a sub bumper reinforcement.

In the vehicle-body front structure according to the above described aspect, a right-side frame member preferably extends obliquely forward-and-rightward, and a left-side frame member preferably extends obliquely forward-and-leftward.

Further, preferably, a right-side impact absorbing member preferably extends obliquely forward-and-rightward and a left-side impact absorbing member preferably extends obliquely forward-and-leftward, wherein each axial line of the pair of impact absorbing members preferably matches each axial line of the corresponding pair of frame members.

In the vehicle-body front structure according to the above described aspect, the impact absorbing member is preferably arranged between the cross member and the sub bumper reinforcement, where a rear end of the impact absorbing member is preferably welded to the cross member, and a front end of the impact absorbing member is preferably welded to the sub bumper reinforcement, so that the impact absorbing members are connected to each other via the sub bumper reinforcement.

In the vehicle-body front structure according to the above described aspect, the first vertical wall, the second vertical wall, and the respective first and third portions of the first lateral wall and the second lateral wall are preferably welded to the cross member.

In the vehicle-body front structure according to the above described aspect, the impact absorbing member comprises preferably an upper wall extending in the vehicle width direction at the closed-cross section and a lower wall arranged below the upper wall with the specified gap therebetween and extending in the vehicle width direction at the closed-cross section, and the upper and lower walls of the impact absorbing member are preferably position-aligned with the corresponding first and second lateral walls of the front subframe in the vertical direction.

Thereby, the collision load is so easily transmitted from the upper and lower walls of the impact absorbing member to the first and second walls of the frame member. Consequently, the frame member is so easily compressed uniformly in the extension direction that the collision-load absorption amount (function) by means of the frame member can be improved.

In the vehicle-body front structure according to the above described aspect, the impact absorbing member includes plural vertical walls which extend in the vertical direction at the closed-cross section and arranged in the vehicle width direction with a specified gap formed therebetween, and the plural vertical walls are preferably position-aligned with the first vertical wall, the second vertical wall, the first inner wall, and the second inner wall in a lateral direction perpendicular to the extension direction.

The present invention further comprises a vehicle comprising a frame member and/or a vehicle-body front structure as described above.

The present invention will become apparent from the following description which refers to the accompanying drawings.

### BRIEF DESCRIPTION OF THE DRAWINGS

FIG. **1** is a side view of a vehicle-body front structure according to an embodiment of the present invention.
FIG. **2** is a plan view of the vehicle-body front structure shown in FIG. **1****.**
FIG. **3** is a plan view of an upper structural body shown in FIG. **1****.**
FIG. **4** is a side view of the upper structural body shown in FIG. **1****.**
FIG. **5** is a sectional view taken along line V-V of FIG. **3****.**
FIG. **6** is a perspective view of a cross member shown in FIG. **3****,** when viewed from an oblique rearward side
FIG. **7** is a sectional view taken along line VII-VII of FIG. **4****.**
FIG. **8** is a sectional view taken along line VIII-VIII of FIG. **7****.**

### DETAILED DESCRIPTION OF THE INVENTION

Hereafter, a frame member for a vehicle and a vehicle-body front structure according to an embodiment of the present invention will be described referring to the accompanying drawings. The following description is mealy an exemplified embodiment, and therefore the present invention is not be limited in its applications or uses by that.

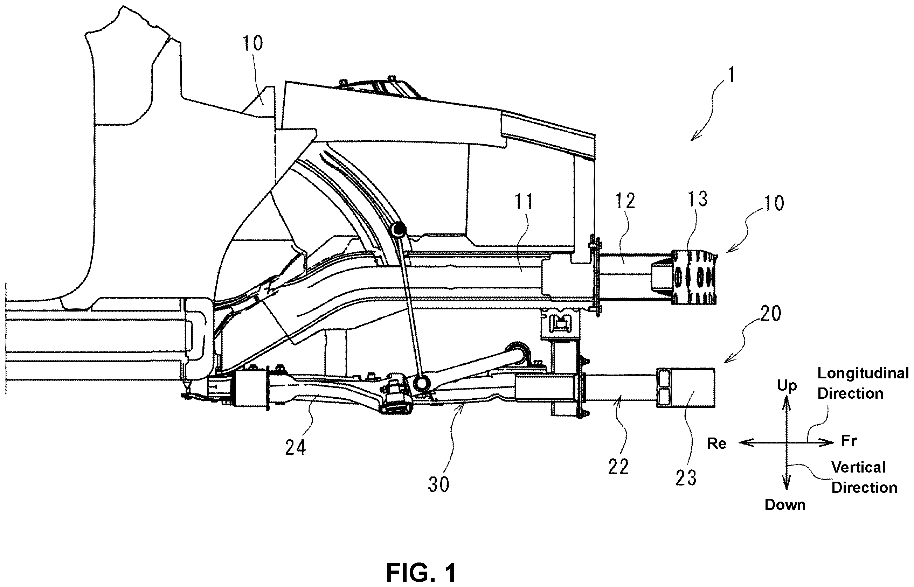

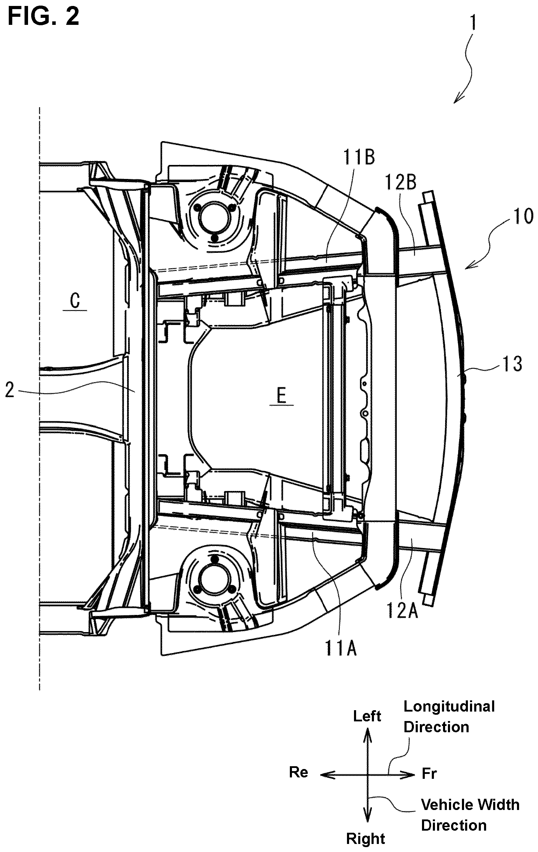

FIG. **1** is a side view of a vehicle-body front structure **1** according to the present embodiment. FIG. **2** is a plan view of the vehicle-body front structure **1** shown in FIG. **1****.** The vehicle-body front structure **1** of the present embodiment is the one for automobiles or the like. In the flowing description, respective longitudinal, width, and vertical directions of a vehicle provided with the vehicle-body front structure **1** will be described simply as a "longitudinal direction," a "vehicle width direction," and a "vertical direction" sometimes. In some cases, one side of a vehicle body which is located on a vehicle's center-line side in the vehicle width direction will be described as an inward side, in the vehicle width direction, of the vehicle body, and the other side of the vehicle body which is located on an opposite side, in the vehicle width direction, to the vehicle's center-line side will be described as an outward side, in the vehicle width direction, of the vehicle body. The vehicle width direction matches a lateral direction of the vehicle.

As shown in FIG. **1****,** the vehicle-body front structure **1** comprises an upper structural body **10** and a lower structural body **20** arranged below the upper structural body **10.** The vehicle-body front structure **1** of the present embodiment is configured such that a collision load which the vehicle-body front structure **1** receives when the vehicle hits against another vehicle, an obstacle or the like is dispersed and absorbed by the upper structural body **10** and the lower structural body **20.**

Referring to FIGS. **1** and **2****,** the upper structural body **10** comprises a pair of front side frames **11A, 11B,** a pair of main crash cans **12A, 12B,** and a main bumper reinforcement **13.** In the flowing description, in a case where the pair of front side frames **11A, 11B** need not to be referred to separately, one of these frames **11A, 11B** will be described as a front side frame **11** simply sometimes. Likewise, in a case where the pair of main crash cans **12A, 12B** need not to be referred to separately, one of these crash cans **12A, 12B** will be described as a main crash can **12** simply sometimes.

The pair of front side frames **11A, 11B** are arranged in the vehicle width direction with a specified gap formed therebetween. The front side frame **11** extends in the longitudinal direction. The front side frame **11** has a closed-cross section perpendicular to its extension direction. The front side frame **11** of the present embodiment is made of aluminum. The "aluminum" used in this specification includes pure aluminum and aluminum alloy.

Respective front ends of the front side frames **11A, 11B** are fixed to the main crash cans **12A, 12B** corresponding thereto. Specifically, the front side frame **11A** is fixed to the main crash can **12A,** and the front side frame **11B** is fixed to the main crash can **12B.** A rear end of the front side frame **11** is fixed to a dash panel **2** which separates an engine room **E** from a cabin **C.**

The main crash can **12** is a member to absorb the collision load applied from a forward side of the vehicle. The pair of main crash cans **12A, 12B** are arranged in the vehicle width direction with a specified gap therebetween. The main crash can **12** extends in the longitudinal direction. The main crash can **12** has a closed-cross section perpendicular to the longitudinal direction. The main crash can **12** of the present embodiment is made of aluminum.

The main crash cans **12A, 12B** are respectively arranged between the front side frames **11A, 11B** and the main bumper reinforcement **13.** Respective front ends of the main crash canes **12A, 12B** are fixed to the main bumper reinforcement **13.** Thus, the main crash cans **12A, 12B** are interconnected via the main bumper reinforcement **13.** Respective rear ends of the main crash cans **12A, 12B** are fixed to the corresponding front side frames **11A, 11B.** Specifically, the rear and of the main crash can **12A** is fixed to the front side frame **11A,** and the rear end of the main crash can **12B** is fixed to the front side frame **11B.**

The main bumper reinforcement **13** extends in the vehicle width direction. The main crash cans **12A, 12B** are fixed to the main bumper reinforcement **13** at their front ends. Thus, the main bumper reinforcement **13** interconnects the main crash cans **12A, 12B.**

When the collision load is applied to the main bumper reinforcement **13** from the forward side of the vehicle, part of the collision load is absorbed by the main crash can **12** and the front side frame **11.** Specifically, the collision load applied to the main bumper reinforcement **13** makes the main crash can **12** and the front side frame **11** crush, so that the part of the collision load is absorbed by these members **12, 11** through their crushing deformation.

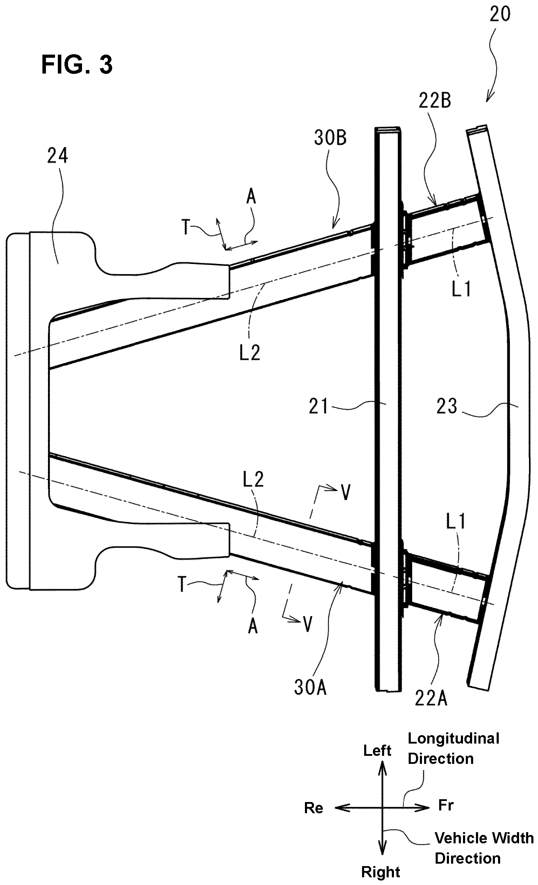

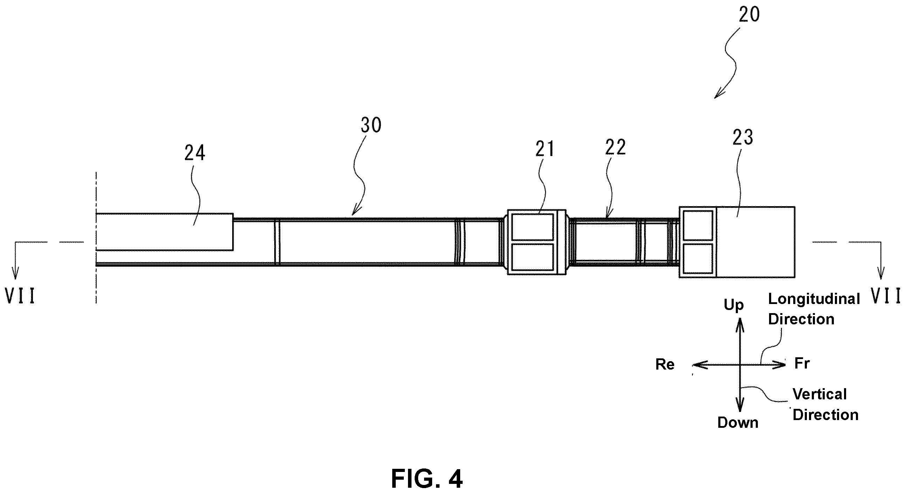

FIG. **3** is a plan view of the lower structural body **20.** FIG. **4** is a side view of the lower structural body **20.** Referring to FIGS. **3** and **4****,** the lower structural body **20** comprises a pair of front subframes **30A, 30B,** a cross member **21,** a pair of sub crash cans **22A, 22B,** and a sub bumper reinforcement **23.** In the flowing description, in a case where the pair of front subframes **30A, 30B** need not to be referred to separately, one of these frames **30A, 30B** will be described as a front subframe **30** simply sometimes. Likewise, in a case where the pair of sub crash cans **22A, 22B** need not to be referred to separately, one of these crash cans **30A, 30B** will be described as a sub crash can **22** simply sometimes.

The pair of front subframes **30A, 30B** are arranged in the vehicle width direction with a specified gap formed therebetween. The front subframe **30** extends obliquely forward-and-outward, in the vehicle width direction, of the vehicle body (hereinafter, referred to as an extension direction **A** sometimes). Specifically, the right-side front subframe **30A** extends obliquely forward-and-rightward, and the left-side front subframe **30B** extends obliquely forward-and-leftward. Thus, the pair of front subframe **30A, 30B** extend forward such that these frames **30A, 30B** go away from each other. Hereinafter, the extension direction **A** of the front side frame **11** will be described as the extension direction **A** simply sometimes, and a horizontal direction in a plane perpendicular to the extension direction **A** will be described as a lateral direction **T** sometimes. The extension direction **A** matches an axial direction of the front subframe **30.** The front subframe **30** of the present embodiment is an example of the frame member for the vehicle according to the present invention.

A front end of the front subframe **30** is connected to the cross member **21.** A rear end of the front subframe **30** is attached to another structural body, such as a battery case (not illustrated) for installing batteries (not illustrated), via a frame bracket **24.** As shown in FIG. **1****,** the front subframe **30** is arranged below the front side frame **11.**

The front subframe **30** is an extruded aluminum frame. A sectional shape of a cross section of the front subframe **30** which is perpendicular to its extension direction **A** is substantially the same over its whole length along the extension direction **A.**

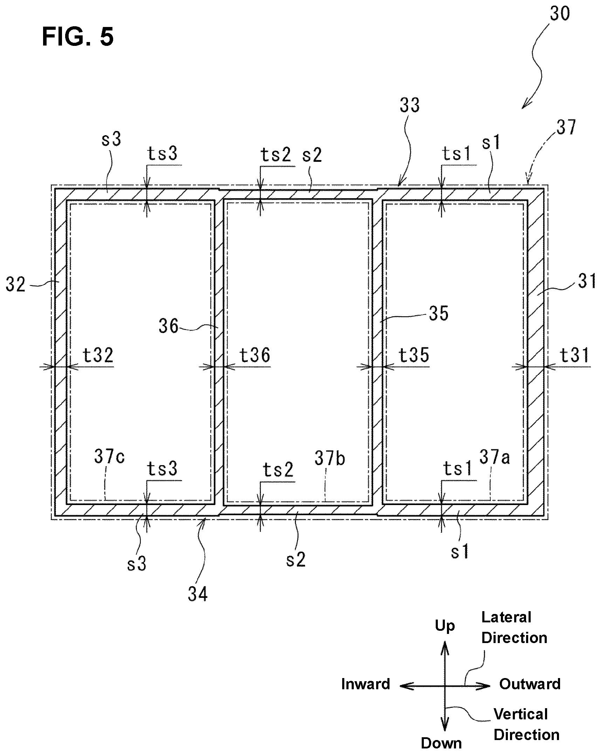

FIG. **5** is a sectional view taken along line V-V of FIG. **3****.** FIG. **5** is the sectional view showing the cross section of the front subframe **30** which is perpendicular to its extension direction **A.** A lateral direction in FIG. **5** matches the above-described lateral direction **T.** The right side in FIG. **5** is located on the outward side, in the vehicle width direction, of the vehicle body, and the left side in FIG. **5** is located on the inward side, in the vehicle width direction, of the vehicle body. While the following description will be conducted referring to the front subframe **30A** shown in FIG. **5****,** the front subframe **30B** has the same constitution as the front subframe **30A.**

Referring to FIG. **5****,** the front subframe **30** comprises a first vertical wall **31,** a second vertical wall **32,** a first lateral wall **33,** a second lateral wall **34,** a first inner wall **35,** and a second inner wall **36.** The front subframe **30** has a rectangular closed-cross section as its cross section shown in FIG. **5****.**

The first vertical wall **31** is a plate member which has its longitudinal direction along the extension direction **A,** its short direction along the vertical direction, and its thickness direction along the lateral direction **T.** The first vertical wall **31** extends in the vertical direction as a whole in the cross section shown in FIG. **5****.** The first vertical wall **31** forms part of an external shape of the front subframe **30.** Specifically, the first vertical wall **31** forms an outward side wall, in the vehicle width direction, of the front subframe **30.**

The second vertical wall **32** is another plate member which has its longitudinal direction along the extension direction **A,** its short direction along the vertical direction, and its thickness direction along the lateral direction **T.** The second vertical wall **32** extends in the vertical direction as a whole in the cross section shown in FIG. **5****.** The second vertical wall **32** forms another part of the external shape of the front subframe **30.** Specifically, the second vertical wall **32** forms an inward side wall, in the vehicle width direction, of the front subframe **30.** The second vertical wall **32** is arranged on the inward side, in the vehicle width direction, of the first vertical wall **31.** The second vertical wall **32** is arranged away from the first vertical wall **31** in the vehicle width direction.

The first lateral wall **33** is another plate member which has its longitudinal direction along the extension direction **A,** its short direction along the lateral direction **T,** and its thickness direction along the vertical direction. The first lateral wall **33** extends in the lateral direction **T** such that it interconnects respective upper ends of the first vertical wall **31** and the second vertical wall **32** in the cross section shown in FIG. **5****.** In other words, the first lateral wall **33** extends in the vehicle width direction such that it interconnects the respective upper ends of the first vertical wall **31** and the second vertical wall **32.** The first lateral wall **33** forms another part of the external shape of the front subframe **30.** Specifically, the first lateral wall **33** forms an upper wall of the front subframe **30.**

The second lateral wall **34** is another plate member which has its longitudinal direction along the extension direction **A,** its short direction along the lateral direction **T,** and its thickness direction along the vertical direction. The second lateral wall **34** extends in the lateral direction **T** such that it interconnects respective lower ends of the first vertical wall **31** and the second vertical wall **32** in the cross section shown in FIG. **5****.** In other words, the second lateral wall **34** extends in the vehicle width direction such that it interconnects the respective lower ends of the first vertical wall **31** and the second vertical wall **32.** The second lateral wall **34** forms another part of the external shape of the front subframe **30.** Specifically, the second lateral wall **34** forms a lower wall of the front subframe **30.** The second lateral wall **34** is arranged below the first lateral wall **33.** The second lateral wall **34** is arranged away from the first lateral wall **33** in the vertical direction.

Each of the first lateral wall **33** and the second lateral wall **34** comprises a first portion **s1**, a second portion **s2,** and a third portion **s3.** The first portion **s1** extends in the lateral direction **T** such that it interconnects the first vertical wall **31** and the first inner wall **35** in the cross section shown in FIG. **5****.** The second portion **s2** extends in the lateral direction **T** such that it interconnects the first inner wall **35** and the second inner wall **36** in the cross section shown in FIG. **5****.** The third portion **s3** extends in the lateral direction **T** such that it interconnects the second vertical wall **32** and the second inner wall **36** in the cross section shown in FIG. **5****.**

The first inner wall **35** is another plate member which has its longitudinal direction along the extension direction **A,** its short direction along the vertical direction, and its thickness direction along the lateral direction **T.** The first inner wall **35** extends in the vertical direction such that it interconnects the first lateral wall **33** and the second lateral wall **34** in the cross section shown in FIG. **5****.** The first inner wall **35** is arranged between the first vertical wall **31** and the second vertical wall **32** in the lateral direction **T.** In other words, the first lateral wall **33** is arranged between the first vertical wall **31** and the second vertical wall **32** in the vehicle width direction.

The second inner wall **36** is another plate member which has its longitudinal direction along the extension direction **A,** its short direction along the vertical direction, and its thickness direction along the lateral direction **T.** The second inner wall **36** extends in the vertical direction such that it interconnects the first lateral wall **33** and the second lateral wall **34** in the cross section shown in FIG. **5****.** The second inner wall **36** is arranged between the second vertical wall **32** and the first inner wall **35** in the lateral direction **T.** In other words, the second inner wall **36** is arranged on the inward side, in the vehicle width direction, of the first inner wall **35** in the vehicle width direction.

As shown in FIG. **5****,** the front subframe **30** has a closed-cross section **37** which is formed by the first vertical wall **31,** the second vertical wall **32,** the first lateral wall **33,** and the second lateral wall **34.** In other words, the first vertical wall **31,** the second vertical wall **32,** the first lateral wall **33,** and the second lateral wall **34** form together the closed-cross section **37** as the external shape of the front subframe **30.** Further, the first vertical wall **31,** the first inner wall **35,** and the respective first portions **s1** of the first lateral wall **33** and the second lateral wall **34** form a first closed-cross section **37a.** The first inner wall **35,** the second inner wall **36,** and the respective second portions **s2** of the first lateral wall **33** and the second lateral wall **34** form a second closed-cross section **37b.** The second vertical wall **32,** the second inner wall **36,** and the respective third portions **s3** of the first lateral wall **33** and the second lateral wall **34** form a third closed-cross section **37c.** Respective areas of the first closed-cross section **37a,** the second closed-cross section **37b,** and the third closed-cross section **37c** are identical to each other.

In the present invention, the area of the closed-cross section means the total of areas of the plural walls forming the closed-cross section in the cross section perpendicular to the extension direction **A** (e.g., the cross section shown in FIG. **5**), which does not include areas enclosed by the plural walls forming the closed-cross section. Further, in the present invention, the meaning of "the respective areas of the first closed-cross section **37a,** the second closed-cross section **37b,** and the third closed-cross section **37c** are identical to each other" includes an embodiment in which these three areas are exactly the same and another embodiment in which these three areas are substantially the same. In the present embodiment, two of these three areas are within a range of 90 - 110% of the other one.

In the present embodiment, the first closed-cross section **37a,** the second closed-cross section **37b,** and the third closed-cross section **37c** are substantially congruence. Specifically, the respective heights, i.e., the respective dimensions along the vertical direction, of the first vertical wall **31,** the second vertical wall **32,** the first inner wall **35,** and the second inner wall **36** are substantially the same, and the respective widths, i.e., the respective dimensions along the lateral direction **T,** of the first portion **s1**, the second portion **s2,** and the third portion **s3** are substantially the same.

The bending rigidity of the first vertical wall **31** is larger than that of the second vertical wall **32.** Further, the bending rigidity of the second vertical wall **32** is larger than that of the first inner wall **35.** Moreover, the bending rigidity of the first inner wall **35** is larger than that of the second inner wall **36.** In other words, the respective bending rigidities of those become larger in order of the first vertical wall **31,** the second vertical wall **32,** the first inner wall **35,** and the second inner wall **36.**

In the present invention, the bending rigidity of the plate member, including the first vertical wall **31,** the second vertical wall **32,** the first lateral wall **33,** the second lateral wall **34,** the first inner wall **35,** and the second inner wall **36,** means the bending rigidity against a bending moment which is applied to the plate member in its thickness direction from both end portions, in the longitudinal direction, of the plate member, i.e., in its extension direction **A.**

In the present embodiment, the larger bending rigidity of the first vertical wall **31** than the second vertical wall **32** is attained by setting the thickness **t31** of the first vertical wall **31,** i.e., its dimension along the lateral direction **T,** to be larger than the thickness **t32** of the second vertical wall **32.** Further, the larger bending rigidity of the second vertical wall **32** than the first inner wall **35** is attained by setting the thickness **t32** of the second vertical wall **32** to be larger than the thickness **t35** of the first inner wall **35.** Likewise, the larger bending rigidity of the first inner wall **35** than the second inner wall **36** is attained by setting the thickness **t35** of the first inner wall **35** to be larger than the thickness **t36** of the second inner wall **36.** Herein, as described above, the height, i.e., the dimension along the vertical direction, is set at the same value among the first vertical wall **31,** the second vertical wall **32,** the first inner wall **35,** and the second inner wall **36.**

The bending rigidity of the first portion **s1** is larger than that of the second portion **s2.** The bending rigidity of the third portion **s3** is larger than that of the second portion **s2.** The bending rigidity of the first portion **s1** is identical to that of the third portion **s3.** In the present embodiment, by setting the thickness **ts1,** i.e., the dimension along the vertical direction, of the first portion **s1** to be larger than the thickness **ts2** of the second portion **s2,** the bending rigidity of the first portion **s1** is larger than that of the second portion **s2.** Likewise, the bending rigidity of the third portion **s3** is set to be larger than that of the second portion **s2** by making the thickness **ts3,** i.e., the dimension along the vertical direction, of the third portion **s3** be larger than the thickness **ts2** of the second portion **s2.** Herein, the widths, i.e., the dimension along the lateral direction **T,** of the first portion **s1**, the second portion **s2,** and the third portion **s3** are substantially identical to each other.

Referring to FIG. **3****,** the cross member **21** extends in the vehicle width direction so as to interconnect respective front ends of the front subframes **30A, 30B.** The cross member **21** is an extruded aluminum member. Further, the cross member **21** has a closed-cross section in its cross section perpendicular to the vehicle width direction.

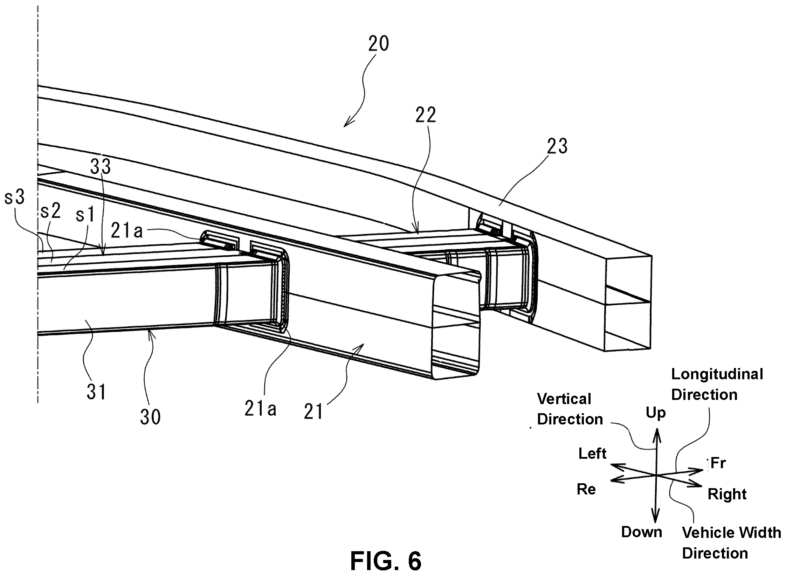

FIG. **6** is a perspective view of the cross member **21,** when viewed from an oblique rearward side. As shown in FIG. **6****,** a joint portion **21a** where the cross member **21** and the front subframe **30** are joined together is formed at a side face of a rear part of the cross member **21.** The joint portion **21a** of the present embodiment is welding marks of welding of the cross member **21** and the front subframe **30.** In the present embodiment, the first vertical wall **31,** the second vertical wall **32,** and the respective first and third portions **s1, s3** of the first lateral wall **33** and the second lateral wall **34** are welded to the cross member **21.**

Referring to FIG. **3****,** the crash can **22** is the member to absorb the collision load applied from the oblique forward side. The pair of sub crash cans **22A, 22B** are arranged with a specified gap formed therebetween in the vehicle width direction. The sub crash can **22** extends obliquely forward-and-outward, in the vehicle width direction, of the vehicle body. Specifically, the sub crash can **22A** extends obliquely forward-and-rightward and the sub crash can **22B** extends obliquely forward-and-leftward. The main crash can **21** of the present embodiment is aluminum-made. The sub crash can **22** of the present embodiment is an example of an impact absorbing member according to the present invention.

The sub crash can **22** is arranged between the cross member **21** and the sub bumper reinforcement **23.** A front end of the sub crash can **22** is welded to the sub bumper reinforcement **23.** Thus, the sub crash cans **22A, 22B** are connected to each other via the sub bumper reinforcement **23.** A rear end of the sub crash can **22** is welded to the cross member **21.**

The sub crash cans **22A, 22B** extend in the same directions as the corresponding front sub frames **30A, 30B.** In other words, the sub crash cans **22A, 22B** extend in the extension directions **A** of the corresponding front sub frames **30A, 30B.** Each axial line **L1** of the sub crash cans **22A, 22B** matches each axial line **L2** of the corresponding front subframes **30A, 30B.** Herein, the meaning of "each axial line **L1** of the sub crash cans **22A, 22B** matches each axial line **L2** of the corresponding front subframes **30A, 30B"** includes an embodiment in which the axial line **L1** of the sub crash cans **22A, 22B** exactly match the axial line **L2** of the corresponding front subframes **30A, 30B** and another embodiment in which the axial line **L1** of the sub crash cans **22A, 22B** is slightly offset from the axial line **L2** of the corresponding front subframes **30A, 30B.**

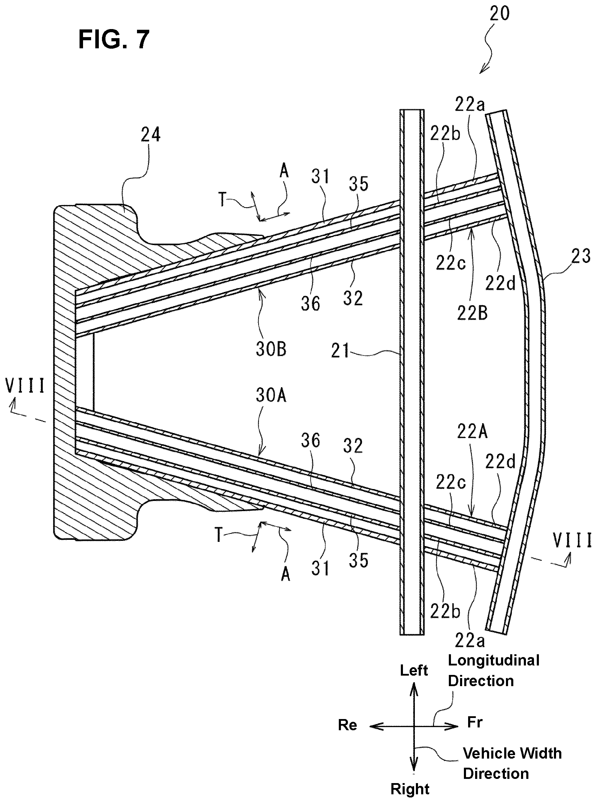

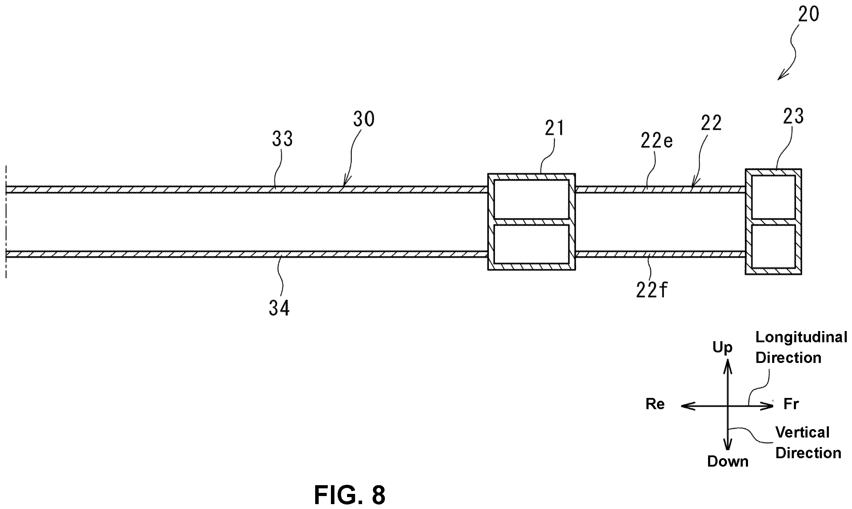

The sub crash can **22,** not illustrated, has the closed-cross section in its cross section perpendicular to the extension direction **A,** which is similar to the front subframe **30.** The sub crash can **22** has four vertical walls **22a - 22d** (shown in FIG. 7) which extend in the vertical direction and arranged with a specified gap formed therebetween in the lateral direction **T** in its cross section perpendicular to the extension direction **A,** and two lateral walls **22e, 22f** (shown in FIG. **8**) which extend in the lateral direction **T** and arranged with a specified gap formed therebetween in the vertical direction in its cross section perpendicular to the extension direction **A.** The upper-side lateral wall **22e** interconnects upper ends of the four vertical walls **22a - 22d,** and the lower-side lateral wall **22f** interconnects respective lower ends of the four vertical walls **22a** - **22d**. Hereinafter, sometimes the lateral wall **22e** will be called the upper wall **22e**, and the lateral wall **22f** will be called lower wall **22f**.

FIG. 7 is a sectional view taken along line VII-VII of FIG. **4****.** The four vertical walls **22a - 22d** of the sub crash can **22** are position-aligned with the corresponding first vertical wall **31**, the first inner wall **35**, the second inner wall **36**, and the second vertical wall **32** of the front subframe **30** in the lateral direction **T** as shown in FIG. 7. Herein, the description of "the walls are position-aligned with the walls in the lateral direction **T"** means that these walls overlap each other totally (as a whole) or partially in the lateral direction **T.**

FIG. **8** is a sectional view taken along line VIII-VIII of FIG. **7****.** The two lateral walls **22e, 22f** of the sub crash can **22** are position-aligned with the corresponding first lateral wall **33** and the second lateral wall **34** of the front subframe **30** in the vertical direction as shown in FIG. **8****.** Herein, the description of "the walls are position-aligned with the walls in the vertical direction" means that these walls overlap each other totally (as a whole) or partially in the vertical direction.

The sub bumper reinforcement **23** extends in the vehicle width direction. Respective front ends of the sub crash cans **22A, 22B** are fixed to the sub bumper reinforcement **23.** Thus, the sub crash cans **22A, 22B** are interconnected by the sub bumper reinforcement **23.**

When the collision load is applied to the sub bumper reinforcement **23** from the oblique forward side, part of the collision load is absorbed by the sub crash can **22** and the front subframe **30.** Specifically, when the collision load is applied to the sub bumper reinforcement **23** from the oblique forward side, the sub crash **22** and the front subframe **30** are so compressed in their extension directions **A** that the collision load can be absorbed by these members **22, 30.**

The vehicle-body front structure **1** and the front subframe **30** according to the present embodiment produce the following operations/effects.
(1) The frame member for the vehicle **30** (the front subframe in the present embodiment) which extends in the longitudinal direction, has the closed-cross section perpendicular to the extension direction **A,** and is configured to absorb the collision load by the impact absorbing member **22** (the sub crash can in the present embodiment) arranged in front thereof, comprising the first vertical wall **31** extending in the vertical direction at the closed-cross section, the second vertical wall **32** arranged on the inward side, in the vehicle width direction, of the first vertical wall **31** and extending in the vertical direction at the closed-cross section, the first lateral wall **33** extending in the vehicle width direction at the closed-cross section, interconnecting the respective upper ends of the first vertical wall **31** and the second vertical wall **32,** the second lateral wall **34** extending in the vehicle width direction at the closed-cross section, interconnecting the respective lower ends of the first vertical wall **31** and the second vertical wall **32,** and forming the closed-cross section together with the first vertical wall **31,** the second vertical wall **32,** and the first lateral wall **33,** the first inner wall **35** arranged between the first vertical wall **31** and the second vertical wall **32** in the vehicle width direction and extending in the vertical direction at the closed-cross section, interconnecting the first lateral wall **33** and the second lateral wall **34,** and the second inner wall **36** arranged between the second vertical wall **32** and the first inner wall **35** in the vehicle width direction and extending in the vertical direction at the closed-cross section, interconnecting the first lateral wall **33** and the second lateral wall **34,** wherein each of the first lateral wall **33** and the second lateral wall **34** comprises the first portion **s1** interconnecting the first vertical wall **31** and the first inner wall **35,** a second portion **s2** interconnecting the first inner wall **35** and the second inner wall **36,** and a third portion **s3** interconnecting the second vertical wall **32** and the second inner wall **36,** and each bending rigidity of the first portion **s1** and the third portion **s3** is larger than that of the second portion **s2.**

According to this structure, since the bending rigidity of the first portion **s1** and the bending rigidity of the third portion **s3** are larger than that of the second portion **s2,** the support rigidity for supporting the impact absorbing member **22** can be enhanced, compared to a case where the bending rigidity of the first portion **s1** and the bending rigidity of the third portion **s3** are smaller than that of the second portion **s2.** Thereby, when the collision load is applied to the vehicle-body front structure from the forward side, the impact absorbing member **22** is compressed easily, so that the impact absorbing member **22** is suppressed from being deformed unexpectedly. Consequently, the collision load is transmitted to the frame member **30** from the impact absorbing member **22** efficiently, so that the collision-load absorption amount (function) by means of the frame member **30** can be improved, compared to the case where the impact absorbing member **22** is deformed unexpectedly.

If the bending rigidity of the second portion **s2** is extremely large, when the collision load is applied to the frame member **30** from the forward side, there is a case where the second portion **s2** hinders the compression of the frame member **30** along the extension direction **A.** According to the present embodiment, however, since the bending rigidity of the second portion **s2** is smaller than that of the first portion **s1** and the third portion **s3,** it can be suppressed that the second portion **s2** hinders the compression of the frame member **30** along the extension direction **A,** compared to a case where the bending rigidity of the second portion **s2** is that of the first portion **s1** and the third portion **s3** or larger. Thereby, the frame member **30** is easily and uniformly compressed in the extension direction **A** even when the collision load is applied to the frame member **30** from the forward side. Consequently, the collision-load absorption amount (function) by means of the frame member **30** can be improved, compared to the case where the bending rigidity of the second portion **s2** is that of each of the first portion **s1** and the third portion **s3** or larger.

(2) The first vertical wall **31,** the first inner wall **35,** and the respective first portions **s1** of the first lateral wall **33** and the second lateral wall **34** form the first closed-cross section **37a** at the above-described closed-cross section. The first inner wall **35,** the second inner wall **36,** and the respective second portions **s2** of the first lateral wall **33** and the second lateral wall **34** form the second closed-cross section **37b** at the above-described closed-cross section. The second vertical wall **32,** the second inner wall **36,** and the respective third portions **s3** of the first lateral wall **33** and the second lateral wall **34** form the third closed-cross section **37c** at the above-described closed-cross section. The area of the first closed-cross section **37a,** the area of the second closed-cross section **37b,** and the area of the third closed-cross section **37c** are identical to each other. Accordingly, each moment of inertia of the respective closed-cross sections against the bending moment which is applied to the frame member **30** in its extension direction **A** from both end portions, in the longitudinal direction, of the frame member **30** has the same value. Consequently, the local buckling can be properly suppressed from occurring at the frame member **30,** and the frame member **30** is so easily compressed uniformly in the extension direction **A** that the collision-load absorption amount (function) by means of the frame member **30** can be improved.

(3) The frame member **30** is the front subframe **30** arranged below the front side frame **11** which is provided on the outward side, in the vehicle width direction, of the engine room **E.** Accordingly, even in a structure in which the collision load applied along the vehicle longitudinal direction is absorbed by the front side frame **11** and the collision load applied from the oblique forward side along the extension direction **A** is absorbed by the front subframe **30,** the front subframe **30** can appropriately absorb the collision load applied along the vehicle longitudinal direction as well.

(4) The vehicle-body front structure **1** of the present embodiment is provided with the frame member **30** for the vehicle and the impact absorbing member **22** (the sub crash can in the present embodiment) arranged in front of the frame member for the vehicle, wherein the axial line **L1** of the impact absorbing member **22** matches the axial line **L2** of the frame member **30** for the vehicle. Accordingly, the collision load is so easily transmitted from the impact absorbing member **22** to the frame member **30** that the collision-load absorption amount (function) by means of the frame member **30** can be improved.

(5) The impact absorbing member **22** comprises the upper wall **22e** extending in the vehicle width direction at the above-described closed-cross section and the lower wall **22f** arranged below the upper wall **22e** with the specified gap therebetween and extending in the vehicle width direction at the above-described closed-cross section. The upper and lower walls **22e, 22f** of the impact absorbing member **22** are position-aligned with the corresponding first and second lateral walls **33, 34** of the frame member **30** in the vertical direction. Thereby, the collision load is so easily transmitted from the upper and lower walls **22e,22f** of the impact absorbing member **22** to the first and second walls **33, 34** of the frame member **30.** Consequently, the frame member **30** is so easily compressed uniformly in the extension direction **A** that the collision-load absorption amount (function) by means of the frame member **30** can be improved.

Herein, the present invention is not limited to the above-described embodiment and any modifications are applicable.

While the above-described embodiment exemplified the front subframe **30** as the example of the frame member for the vehicle according to the present invention, any other frame member is applicable.

While the above-described embodiment is configured such that the front subframe **30** comprises the two inner walls, i.e., the first inner wall **35** and the second inner wall **36,** the front subframe **30** may have three or more inner walls.

Further, while the respective thickness of the plural portions, i.e., the thickness **t31** of the first vertical wall **31,** the thickness **t32** of the second vertical wall **32,** the thickness **t35** of the first inner wall **35,** and the thickness **t36** of the second inner wall **36** are different from each other in the above-described embodiment, these may be the same.

Moreover, the sub crash can **22** is not limited to the above-described embodiment in which its cross section perpendicular to the extension direction **A** has the same sectional shape as the front subframe **30.**

## Claims

1. A frame member (30) for a vehicle, which extends in a longitudinal direction and in particular obliquely forward-and-outward, in a vehicle width direction, has a closed-cross section (37) perpendicular to an extension direction (A) thereof, and is preferably configured to absorb a collision load by an impact absorbing member (20) arranged in front thereof, comprising:
a first vertical wall (31) extending in a vertical direction at said closed-cross section (37);
a second vertical wall (32) arranged on an inward side, in a vehicle width direction, of the first vertical wall (31) and extending in the vertical direction at said closed-cross section (37);
a first lateral wall (33) extending in the vehicle width direction at said closed-cross section (37), interconnecting respective upper ends of the first vertical wall (31) and the second vertical wall (32);
a second lateral wall (34) extending in the vehicle width direction at said closed-cross section (37), interconnecting respective lower ends of the first vertical wall (31) and the second vertical wall (32), and forming said closed-cross section (37) together with the first vertical wall (31), the second vertical wall (32), and the first lateral wall (33);
a first inner wall (36) arranged between the first vertical wall (31) and the second vertical wall (32) in the vehicle width direction and extending in the vertical direction at said closed-cross section (37), interconnecting the first lateral wall (33) and the second lateral wall (34); and
a second inner wall (36) arranged between the second vertical wall (32) and the first inner wall (35) in the vehicle width direction and extending in the vertical direction at said closed-cross section (37), interconnecting the first lateral wall (33) and the second lateral wall (34),
wherein each of said first lateral wall (33) and said second lateral wall (34) comprises a first portion (s1) interconnecting said first vertical wall (31) and said first inner wall (35), a second portion (s2) interconnecting the first inner wall (35) and said second inner wall (36), and a third portion (s3) interconnecting said second vertical wall (32) and the second inner wall (36), and
each bending rigidity of said first portion (s1) and said third portion (s3) is larger than that of said second portion (s3).

2. The frame member (30) for the vehicle according to claim 1, wherein the larger bending rigidity of said first portion (s1) and said third portion (s3) than that of said second portion (s3) is obtained by setting the thickness (ts1, ts3), i.e. the dimension along the vertical direction, of the first portion (s1) and of the third portion (s3) to be larger than the thickness (ts2) of the second portion (s2).

3. The frame member (30) for the vehicle of claim 1 or 2, wherein the bending rigidity of the first portion (s1) is identical to that of the third portion (s3).

4. The frame member (30) for the vehicle according to any one of the preceding claims, wherein said first vertical wall (31), said first inner wall (35), and said respective first portions (s1) of the first lateral wall (33) and the second lateral wall (34) form a first closed-cross section (37a) at said closed-cross section (37), the first inner wall (35), said second inner wall (36), and said respective second portions (s2) of the first lateral wall (33) and the second lateral wall (34) form a second closed-cross section (37b) at said closed-cross section (37), said second vertical wall (32), the second inner wall (36), and said respective third portions (s3) of the first lateral wall (33) and the second lateral wall (34) form a third closed-cross section (37c) at said closed-cross section (37), and an area of said first closed-cross section (37a), an area of said second closed-cross section (37b), and an area of said third closed-cross section (37c) are identical to each other.

5. The frame member (30) for the vehicle according to any one of the preceding claims, wherein said frame member (30) is a front subframe arranged below a front side frame (11) which is provided on an outward side, in the vehicle width direction, of an engine room (E).

6. The frame member (30) for the vehicle according to any one of the preceding claims, wherein said frame member (30) is an extruded frame member.

7. A vehicle-body front structure (1) provided with the frame member (30) for the vehicle according to any one of the preceding claims, wherein the vehicle-body front structure (1) preferably further comprises an impact absorbing member (22) arranged in front of the frame member (30) for the vehicle.

8. The vehicle-body front structure (1) according to claim 7, wherein an axial line (L1) of said impact absorbing member (22) matches an axial line (L2) of said frame member (30) for the vehicle.

9. The vehicle-body front structure (1) according to any one of claims 7 to 8, wherein the vehicle-body front structure (1) comprises a pair of frame members (30A, 30B) according to any one of the preceding claims 1 to 6 and preferably a pair of impact absorbing members (22A, 22B), wherein the vehicle-body front structure (1) preferably further comprises a cross member (21) and a sub bumper reinforcement (23).

10. The vehicle-body front structure (1) according to claim 9, wherein the right-side frame member (30A) extends obliquely forward-and-rightward, and the left-side frame member (30B) extends obliquely forward-and-leftward; and the right-side impact absorbing member (22A) extends obliquely forward-and-rightward and the left-side impact absorbing member (22B) extends obliquely forward-and-leftward, wherein each axial line (L1) of the pair of impact absorbing members (22A, 22B) matches each axial line (L2) of the corresponding pair of frame members (30A, 30B).

11. The vehicle-body front structure (1) according to any one of claims 9 to 10, wherein the impact absorbing member (22) is arranged between the cross member (21) and the sub bumper reinforcement (23), where a rear end of the impact absorbing members (22A, 22B) is welded to the cross member (21), and a front end of the impact absorbing members (22A, 22B) is welded to the sub bumper reinforcement (23), so that the impact absorbing members (22A, 22B) are connected to each other via the sub bumper reinforcement (23).

12. The vehicle-body front structure (1) according to claim 11, wherein the first vertical wall (31), the second vertical wall (32), and the respective first and third portions (s1, s3) of the first lateral wall (33) and the second lateral wall (34) are welded to the cross member (21).

13. The vehicle-body front structure (1) according to any one of claims 8 to 12, wherein said impact absorbing member (22) comprises an upper wall (22e) extending in the vehicle width direction at said closed-cross section and a lower wall (22f) arranged below said upper wall (22e) with a specified gap therebetween and extending in the vehicle width direction at said closed-cross section, and said upper and lower walls (22e, 22f) of the impact absorbing member (22) are position-aligned with said corresponding first and second lateral walls (33, 34) of the front subframe in the vertical direction.

14. The vehicle-body front structure (1) of claim 13, wherein said impact absorbing member (22) includes plural vertical walls (22a - 22d) which extend in the vertical direction at said closed-cross section and are arranged in the vehicle width direction with a specified gap formed therebetween, and said plural vertical walls (22a - 22d) are position-aligned with said first vertical wall (31), said second vertical wall (32), said first inner wall (35), and said second inner wall (36) in a lateral direction (T) perpendicular to said extension direction (A).

15. A vehicle comprising a frame member (30) according to any one of claims 1 to 8 and/or a vehicle-body front structure (1) according to any one of claims 9 to 14.
